# EUROPÄISCHE PATENTANMELDUNG

(11) **EP 3 879 136 A1**
(43) Veröffentlichungstag der Anmeldung: **15.09.2021**
(21) Anmeldenummer: 21156682.3
(22) Anmeldetag: 11.02.2021
(51) Int. Cl.: F16H 61/28, F16H 63/34, F16H 63/38

(54) **VERRIEGELUNGSEINHEIT**

(30) Priorität: 13.03.2020 DE 102020107057
(71) Anmelder: SVM Schultz Verwaltungs-GmbH & Co. KG, 87700 Memmingen (DE)
(72) Erfinder: Wassermann, Ralph, 87752 Holzgünz (DE); Hölzle, Florian, 89257 Illertissen (DE); Schütz, Wolfgang, 87700 Memmingen (DE)
(74) Vertreter: Patentanwälte Olbricht, Buchold, Keulertz Partnerschaft mbB

(57) **Zusammenfassung**

Die Erfindung betrifft eine Verriegelungseinheit, insbesondere für die Parksperre eines Automatikgetriebes, für das Verriegeln der Bewegung eines von einem Antrieb bewegbaren Kolbens, wobei ein Führungselement Rastelemente radial auswärts drückt und mit dem Führungselement ein magnetisches Element zum Sensieren der Position des Führungselements verbunden ist.

## Beschreibung

Die Erfindung betrifft eine Verriegelungseinheit insbesondere für die Parksperre eines Automatikgetriebes.

Verriegelungseinheiten werden beispielsweise für Automatikgetriebe von Kraftfahrzeugen verwendet, welche in einem geparkten Zustand verriegelt werden. Derartige Verriegelungseinheiten sind typischerweise so ausgeführt, dass die Parksperre je nach Schaltstellung in unterschiedlichen Zuständen ist bzw. verriegelt ist oder nicht verriegelt ist. Hierzu kann beispielsweise ein Kolben verwendet werden, welcher insbesondere hydraulisch bewegt werden kann und elektromechanisch verriegelt werden kann.

Es ist eine Aufgabe der Erfindung, eine Verriegelungseinheit alternativ oder besser auszuführen. Dies wird erfindungsgemäß durch eine Verriegelungseinheit nach Anspruch 1 erreicht. Vorteilhafte Ausgestaltungen sind in den Unteransprüchen beansprucht.

Die Erfindung betrifft eine Verriegelungseinheit, insbesondere für die Parksperre eines Automatikgetriebes. Die Verriegelungseinheit dient insbesondere dem Verriegeln der Bewegung eines von einem Antrieb bewegbaren, insbesondere mit Druck bzw. hydraulischem Druck beaufschlagbaren Kolbens. Die Verriegelungseinheit weist einen Elektromagneten auf. Sie weist mindestens ein Rastelement auf. Der Kolben weist mindestens eine erste Rastaufnahme und eine zweite Rastaufnahme auf. Der Kolben ist durch das haltende Zusammenwirken eines Rastelements mit einer Rastaufnahme festlegbar.

Mit einem Anker oder einer Ankerstange des Elektromagneten ist ein Führungselement verbunden, welches je nach Lage die Rastelemente radial auswärts drückt.

Erfindungsgemäß ist vorgesehen, dass mit dem Führungselement ein magnetisches Element verbunden ist und in der Verriegelungseinheit ein Magnetfeldsensor zum Erfassen eines Magnetfelds des magnetischen Elements angeordnet ist.

Mittels einer solchen Verriegelungseinheit ist es nicht nur möglich, den Kolben zu verriegeln, sondern auch auf einfache Weise eine Rückmeldung dahingehend zu bekommen, ob eine Verriegelung mittels des Führungselements auch tatsächlich stattgefunden hat. Das Führungselement dient insbesondere dazu, die Rastelemente je nach seiner Lage radial auswärts zu drücken oder eben nicht radial auswärts zu drücken. Bei entsprechender Stellung des Führungselements wird dadurch eine Verriegelung erreicht. Durch die Kopplung des magnetischen Elements mit dem Führungselement bewegt sich das magnetische Element grundsätzlich mit dem Führungselement mit. Seine Lage kann mittels des Magnetfeldsensors sensiert werden. Insbesondere kann anhand einer Magnetfeldstärke erkannt werden, wie nah das magnetische Element am Magnetfeldsensor ist oder ob es eventuell durch andere Komponenten abgeschirmt wird.

Bei dem magnetischen Element kann es sich insbesondere um einen Permanentmagneten handeln.

Gemäß einer Ausführung ist das magnetische Element in dem Führungselement angeordnet. Beispielsweise kann es innerhalb des Führungselements eingebaut sein und beispielsweise vom Material des Führungselements umfasst sein.

Das magnetische Element kann insbesondere an einem dem Anker gegenüberliegenden axialen Ende des Führungselements angeordnet sein. Dadurch wird ein größerer Abstand zum Elektromagneten und somit eine möglichst geringe Beeinflussung der Messung des Magnetfeldsensors durch ein vom Elektromagneten erzeugtes Magnetfeld erreicht.

Das magnetische Element kann insbesondere über eine Verbindungsstange mit dem Anker und/oder mit der Ankerstange und/oder mit dem Führungselement verbunden sein. Durch eine solche Verbindungsstange kann der Abstand zwischen dem magnetischen Element und dem Elektromagneten noch weiter erhöht werden, so dass eine noch geringere Beeinflussung der Messung zu erwarten ist.

Das magnetische Element kann insbesondere innerhalb des Kolbens angeordnet sein. Es kann insbesondere vom Kolben geführt sein. Insbesondere kann dies bei der Ausführung mit Verbindungsstange der Fall sein, da in diesem Fall die Verbindungsstange den Abstand zwischen magnetischem Element und Führungselement definieren kann und somit der Abstand so groß sein kann, dass das magnetische Element in einem vom Führungselement beabstandeten Bereich des Kolbens angeordnet sein kann, welcher typischerweise einen kleineren Durchmesser hat.

Bevorzugt ist zwischen der Verbindungsstange und der Ankerstange oder in der Verbindungsstange ein Gelenk ausgebildet. Dadurch kann ein gewisses Spiel vorgesehen werden, welches durch das Gelenk definiert wird, so dass beispielsweise bei Führung des magnetischen Elements im Kolben keine Überbestimmtheit des Systems auftritt. Eventuelle Toleranzen können durch das Gelenk in einfacher Weise ausgeglichen werden, ohne dass es dabei zu Verklemmungen oder übermäßigem Abrieb kommt.

Der Kolben kann insbesondere aus einem nichtferromagnetischen Material ausgebildet sein. Dies kann insbesondere dann der Fall sein, wenn das magnetische Element in dem Kolben angeordnet ist und insbesondere, wenn nicht die im nächsten Abschnitt beschriebenen Öffnungen vorhanden sind. Die Ausbreitung des Magnetfelds und damit die Messung werden in diesem Fall durch den Kolben nicht oder nur wenig behindert oder gestört. Auch in anderen Fällen kann der Kolben jedoch aus nicht ferromagnetischem Material ausgebildet sein.

Gemäß einer Ausführung sind in dem Kolben eine erste Öffnung und eine zweite Öffnung ausgebildet, wobei die erste Öffnung radial innenliegend zum Magnetfeldsensor angeordnet ist, wenn sich der Kolben in einer ersten Endlage befindet, und wobei die zweite Öffnung radial innenliegend zum Magnetfeldsensor angeordnet ist, wenn sich der Kolben in einer zweiten Endlage befindet. Dadurch kann insbesondere erreicht werden, dass das Magnetfeld, welches vom magnetischen Element erzeugt wird, durch die Öffnung gut durchtreten kann, wenn sich das magnetische Element, die entsprechende Öffnung und der Magnetfeldsensor axial an der gleichen Stelle befinden. Anders ausgedrückt kann dies der Fall sein, wenn sich das magnetische Element radial innenliegend zu einer Öffnung befindet und sich die Öffnung wiederum radial innenliegend zum Magnetfeldsensor befindet. Ist das magnetische Element dagegen axial von der Öffnung beabstandet, kann das Magnetfeld durch den Kolben abgeschirmt werden und somit eine größere Differenz im vom Magnetfeldsensor sensierten Magnetfeld zwischen unterschiedlichen Positionen erzeugt werden.

Der Kolben kann insbesondere aus einem ferromagnetischen Material ausgebildet sein. Dies kann insbesondere im Zusammenhang mit der eben erwähnten Ausführung mit Öffnungen sinnvoll sein, da das Magnetfeld dann abgeschirmt wird, wenn sich das magnetische Element axial von den Öffnungen beabstandet befindet. Damit kann wie bereits erwähnt der Unterschied im detektierten Magnetfeld vergrößert werden. Auch bei anderen Ausführungen kann der Kolben jedoch ferromagnetisch ausgeführt sein, oder es kann bei der Ausführung mit Löchern ein nicht ferromagnetischer Kolben verwendet werden.

Der Magnetfeldsensor kann insbesondere radial außenliegend zum magnetischen Element angeordnet sein, wenn sich das Führungselement in einer Endlage befindet. Bevorzugt kann der Magnetfeldsensor radial außenliegend zum magnetischen Element angeordnet sein, wenn sich das Führungselement in derjenigen Endlage mit maximalem Abstand zum Elektromagneten befindet. Dadurch kann der Abstand zwischen Magnetfeldsensor und Elektromagnet vergrößert werden, so dass Störeinflüsse minimiert werden. Insbesondere kann der Magnetfeldsensor in einem Gehäuse der Verriegelungseinheit angeordnet sein, welches den Kolben aufnimmt. Der Magnetfeldsensor kann dabei beispielsweise axial im Bereich des Führungselements angeordnet sein, jedoch typischerweise radial weiter außen liegen. Der Magnetfeldsensor kann auch in einem Flansch des Gehäuses angeordnet sein. Dies kann insbesondere bei Ausführungen der Fall sein, welche eine Verbindungsstange verwenden.

Der Magnetfeldsensor kann gemäß einer Ausführung im Kolben angeordnet sein. Dadurch kann insbesondere ein Magnetfeld eines sich im Kolben bewegenden bzw. darin geführten magnetischen Elements detektiert werden. Insbesondere bei dieser Ausführung kann der Magnetfeldsensor mittels einer Halterung an einem Gehäuse der Verriegelungseinheit befestigt sein, wobei insbesondere in diesem Fall eine sich axial erstreckende Ausnehmung im Kolben vorgesehen sein kann, so dass die Halterung hindurchtreten kann.

Der Magnetfeldsensor kann insbesondere ein Hall-Sensor sein. Dies hat sich für typische Ausführungen bewährt. Auch andere Ausführungen können jedoch verwendet werden.

Die Verriegelungseinheit kann insbesondere eine Auswerteeinheit aufweisen, welche mit dem Magnetfeldsensor gekoppelt ist und dazu konfiguriert ist, basierend auf Ausgangswerten des Magnetfeldsensors eine Lage des Führungselements zu ermitteln. Damit kann insbesondere überprüft werden, ob eine Verriegelung auch tatsächlich funktioniert hat, wobei beispielsweise überprüft werden kann, ob sich ein sensiertes Magnetfeld betragsmäßig überhalb oder unterhalb eines Schwellenwerts befindet. Auch die Verwendung richtungssensitiver Daten eines Magnetfelds ist möglich.

Die Verriegelungseinheit kann insbesondere eine Vorspannfeder aufweisen, welche das Führungselement in eine Endlage vorspannt. Diese ist dann typischerweise diejenige Endlage, welche das Führungselement bei nicht bestromtem Elektromagneten einnimmt.

Die Erfindung wird nun mit Bezug auf die beiliegenden Figuren beschrieben. Dabei zeigen:
- Fig. 1:: eine Verriegelungseinheit gemäß einem ersten Ausführungsbeispiel,
- Fig. 2:: eine Verriegelungseinheit gemäß einem zweiten Ausführungsbeispiel,
- Fig. 3a und 3b:: eine Verriegelungseinheit gemäß einem dritten Ausführungsbeispiel, und
- Fig. 4a und 4b:: eine Verriegelungseinheit gemäß einem vierten Ausführungsbeispiel.

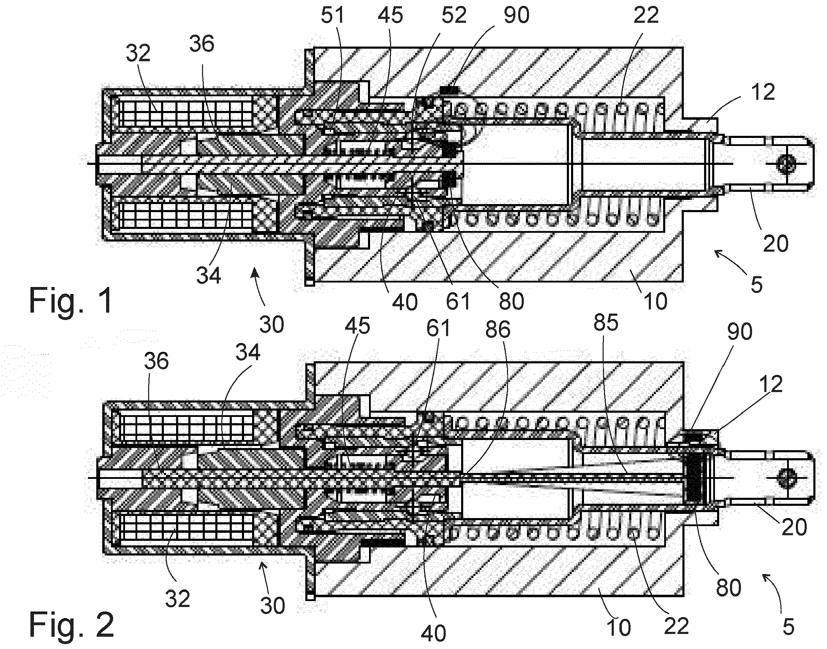

Fig. 1 zeigt eine Verriegelungseinheit 5 gemäß einem ersten Ausführungsbeispiel der Erfindung. Die Verriegelungseinheit 5 weist ein Gehäuse 10 auf, an welchem rechtsseitig ein Flansch 12 ausgebildet ist. In dem Gehäuse 10 ist ein Kolben 20 geführt, welcher teilweise aus dem Gehäuse 10 heraussteht, und zwar am Flansch 12. Er kann zum Verriegeln einer Parksperre eines Automatikgetriebes verwendet werden. Der Kolben 20 wird von einer im Gehäuse 10 angeordneten Kolbenfeder 22 nach links gedrückt und kann auf nicht weiter dargestellte Weise hydraulisch nach rechts gedrückt werden. In dem Kolben 20 sind eine erste Rastaufnahme 51 und eine zweite Rastaufnahme 52 ausgebildet. Diese dienen dazu, Rastelemente 61 aufzunehmen, welche in die Rastaufnahmen 51, 52 gedrückt werden können.

Zur Verriegelung ist zunächst ein Elektromagnet 30 linksseitig an der Verriegelungseinheit 5 vorgesehen. Der Elektromagnet 30 weist eine Spule 32 auf, welche bei durchfließendem Strom ein Magnetfeld erzeugen kann. Der Elektromagnet 30 weist einen Anker 34 auf, welcher mit einer Ankerstange 36 verbunden ist. Die Ankerstange 36 ist rechtsseitig mit einem Führungselement 40 verbunden. Das Führungselement 40 wird von einer Vorspannfeder 45 nach rechts in eine Endlage gedrückt. Es kann somit bei unbestromtem Elektromagneten 30 in dieser Endlage verbleiben und wird bei bestromtem Elektromagneten 30 nach links gezogen. Abhängig von seiner Lage drückt das Führungselement 40 die Rastelemente 61 nach außen oder nicht.

Rechtsseitig an dem Führungselement 40 ist ein magnetisches Element 80 in Form eines Permanentmagneten angebracht. Dieses erzeugt ein magnetisches Feld, welches sich insbesondere radial nach außen ausbreitet.

In dem in Fig. 1 dargestellten Zustand befindet sich das Führungselement 40 in seiner rechtsseitigen Endlage, in welchem es am meisten vom Elektromagneten 30 beabstandet ist. Ein Magnetfeldsensor 90 in Form eines Hall-Sensors ist unmittelbar radial außerhalb des sich in dieser Endlage befindenden magnetischen Elements 80 angeordnet. Dies führt dazu, dass die Magnetfeldlinien wie gezeigt durch das magnetische Element 90 durchgehen und der Abstand in diesem Zustand zwischen magnetischem Element 80 und Magnetfeldsensor 90 am geringsten ist. Wird der Elektromagnet 30 bestromt, so wird das Führungselement 40 vom Anker 34 nach links gezogen und der Abstand zwischen magnetischem Element 80 und Magnetfeldsensor 90 erhöht sich. Dies wird mittels des Magnetfeldsensors 90 detektiert, so dass basierend auf dem detektierten Magnetfeld auf die Position des magnetischen Elements 80 und damit auch auf die Position des damit fest verbundenen Führungselements 40 geschlossen werden kann. Befindet sich das Führungselement 40 in seiner in Fig. 1 dargestellten Endlage, so ist eine Verriegelung bewirkt, da die Rastelemente 61 nach außen gedrückt werden. Ein dazu korrespondierendes Magnetfeld kann in einfacher Weise detektiert werden, und es kann beispielsweise festgestellt werden, dass dieses einen vorgegebenen Schwellenwert überschreitet. Dies erlaubt eine einfache Überprüfung einer zuverlässigen Verriegelung.

Fig. 2 zeigt eine Verriegelungseinheit 5 gemäß einem zweiten Ausführungsbeispiel. Dabei ist im Gegensatz zur Ausführung von Fig. 1 das magnetische Element 80 nicht unmittelbar am Führungselement 40 befestigt, sondern über eine Verbindungsstange 85 weiter rechts davon beabstandet. Das magnetische Element 80 wird in dieser Ausführung im Kolben 20 geführt und von diesem getragen. Zwischen Ankerstange 36 und Führungsstange 85 ist ein Gelenk 86 angeordnet, mit welchem die Führungsstange 85 sich relativ zur Ankerstange 36 in ihrem Winkel verändern kann. Dadurch wird eine Überbestimmtheit des Systems vermieden, und einer Verklemmung oder einem erhöhten Abrieb wird damit vorgebeugt.

Der zugehörige Magnetfeldsensor 90 ist radial außerhalb im Flansch 12 des Gehäuses 10 angeordnet. Wenn sich das magnetische Element 80 am weitesten rechts befindet, also in einer Endlage, welche derjenigen von Fig. 1 entspricht, so liegt das magnetische Element 80 radial innerhalb des Magnetfeldsensors 90. Dadurch ist in diesem Fall der Abstand am kürzesten, wobei dieser Abstand vergrößert wird, wenn das magnetische Element 80 zusammen mit dem Führungselement 40 nach links gezogen wird. Dies kann vom Magnetfeldsensor 90 detektiert werden. Bevorzugt ist dabei der Kolben 20 aus einem nicht ferromagnetischen Material, um die Ausbreitung der Magnetfeldlinien nicht zu stören.

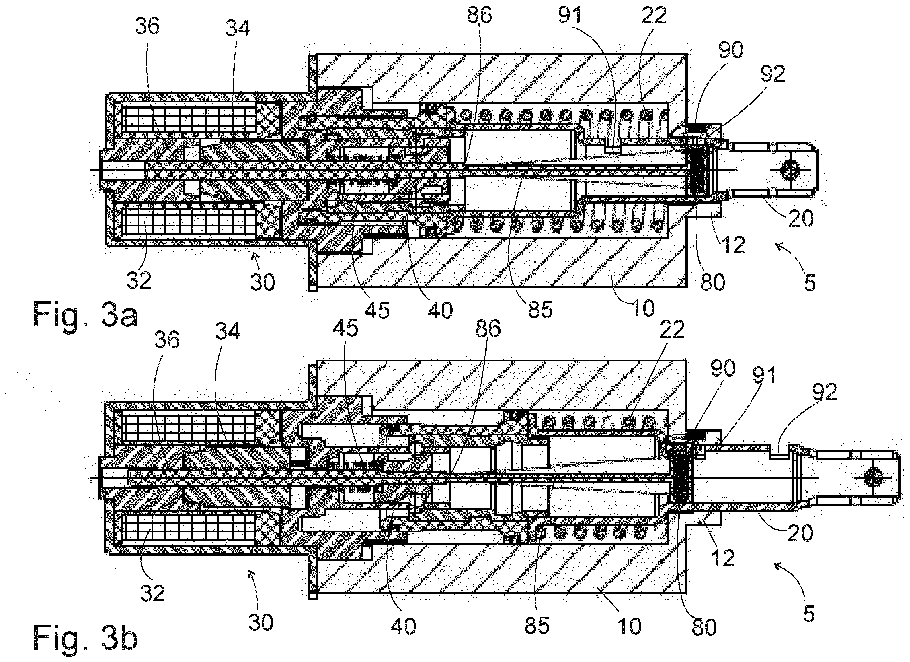

Die Fig. 3a und 3b zeigen eine Verriegelungseinheit 5 gemäß einem dritten Ausführungsbeispiel. Im Gegensatz zur Ausführung von Fig. 2 ist dabei vorliegend der Kolben 20 aus einem ferromagnetischen Material ausgebildet. Des Weiteren sind in dem Kolben 20 eine erste Öffnung 91 und eine zweite Öffnung 92 ausgebildet. Fig. 3a zeigt einen Zustand, in welchem der Kolben 20 seine linksseitige Endlage einnimmt, und das magnetische Element 80 seine rechtsseitige Endlage einnimmt. Fig. 3b zeigt eine Stellung, in welcher der Kolben 20 seine rechtsseitige Endlage einnimmt und das magnetische Element 80 seine linksseitige Endlage einnimmt. Wie gezeigt ist in dem Zustand von Fig. 3a die zweite Öffnung 92 radial innerhalb des Magnetfeldsensors 90 angeordnet. Auch das magnetische Element 80 ist genau radial innerhalb des Magnetfeldsensors 90 angeordnet. In dem Zustand von Fig. 3b ist dagegen die erste Öffnung 91 genau radial innerhalb des Magnetfeldsensors 90 angeordnet. Das magnetische Element 80 ist jedoch axial beabstandet dazu angeordnet.

In dem Zustand von Fig. 3a ermöglicht die zweite Öffnung 92 eine unmittelbare Ausbreitung der Magnetfeldlinien durch die zweite Öffnung 92 zum Magnetfeldsensor 90 hin. Dadurch ist das Magnetfeld in diesem Zustand besonders stark. Wird das magnetische Element 80 jedoch nach links verschoben, so werden die Magnetfeldlinien vom ferromagnetischen Kolben 20 abgelenkt und erreichen nicht mehr oder nur noch sehr schwach den Magnetfeldsensor 90. Der Effekt wäre äquivalent, wenn sich der Kolben 20 im Gegensatz zum in Fig. 3b dargestellten Zustand in seiner linksseitigen Endlage befinden würde. Durch die beschriebene Ausführung mit den beiden Öffnungen 91, 92 und insbesondere auch mit dem ferromagnetischen Kolben kann eine besonders hohe Differenz zwischen dem sensierten Magnetfeld in den beiden Endlagen des magnetischen Elements 80 und damit auch des Führungselements 40 erreicht werden.

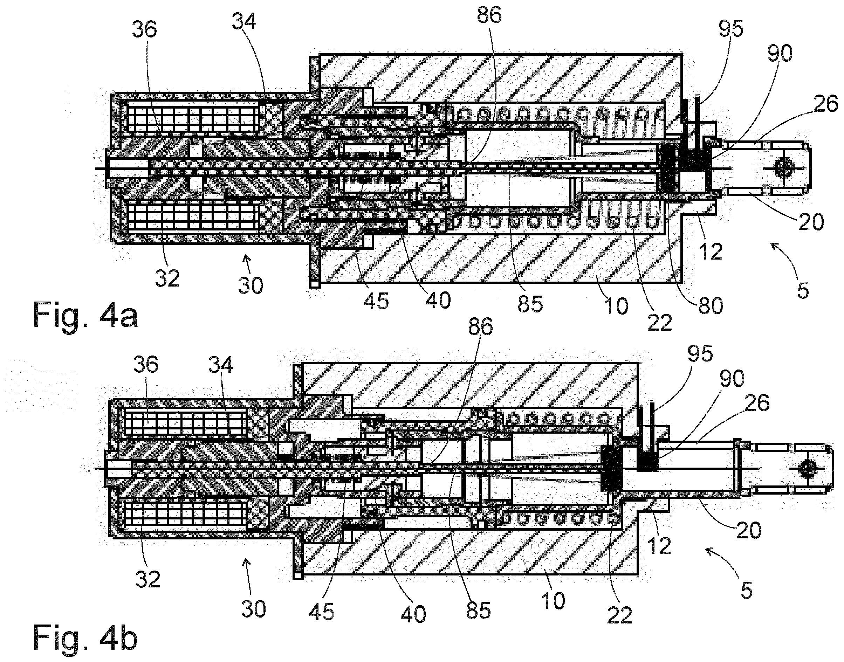

Die Fig. 4a und 4b zeigen eine Verriegelungseinheit 5 gemäß einem vierten Ausführungsbeispiel. Bezüglich der gezeigten Zustände und der jeweiligen Stellungen des Kolbens 20 und des magnetischen Elements 80 sei auf die Beschreibung der Fig. 3a und 3b verwiesen.

Im Gegensatz zur Ausführung der Fig. 3a und 3b ist der Magnetfeldsensor 90 nicht in dem Gehäuse 10 angeordnet, sondern befindet sich im Kolben 20. Hierzu ist an der Oberseite des Kolbens 20 eine sich axial erstreckende Ausnehmung 26 angeordnet, durch welche eine Halterung 95 für das magnetische Element 90 hindurchtritt. Diese ist am Gehäuse 10 befestigt und trägt den Magnetfeldsensor 90. Dadurch kann anhand einer Änderung des Magnetfelds ein Abstand zwischen dem magnetischen Element 80 und dem Magnetfeldsensor 90 unmittelbar sensiert werden, ohne dass das Magnetfeld durch andere Komponenten hindurchtreten muss.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 5:: Verriegelungseinheit
- 10:: Gehäuse
- 12:: Flansch
- 20:: Kolben
- 22:: Kolbenfeder
- 26:: Ausnehmung
- 30:: Elektromagnet
- 32:: Spule
- 34:: Anker
- 36:: Ankerstange
- 40:: Führungselement
- 45:: Vorspannfeder
- 51:: Rastaufnahme
- 52:: Rastaufnahme
- 61:: Rastelement
- 80:: magnetisches Element
- 85:: Führungsstange
- 86:: Gelenk
- 90:: Magnetfeldsensor
- 91:: Öffnung
- 92:: Öffnung
- 95:: Halterung

## Patentansprüche

1. Verriegelungseinheit, insbesondere für die Parksperre eines Automatikgetriebes, für das Verriegeln der Bewegung eines von einem Antrieb bewegbaren, insbesondere mit Druck bzw. hydraulischen Druck beaufschlagbaren Kolbens (20),
▪ wobei die Verriegelungseinheit (5) einen Elektromagneten (30) und mindestens ein Rastelement (61) aufweist, der Kolben (20) mindestens eine erste Rastaufnahme (51) und eine zweite Rastaufnahme (52) aufweist und der Kolben (20) durch das haltende Zusammenwirken eines Rastelements (61) mit einer Rastaufnahme (51, 52) festlegbar ist,
▪ wobei mit einem Anker (34) oder einer Ankerstange (36) des Elektromagneten (30) ein Führungselement (40) verbunden ist, welches je nach Lage die Rastelemente (61) radial auswärts drückt,
**dadurch gekennzeichnet, dass**
mit dem Führungselement (40) ein magnetisches Element (80) verbunden ist und in der Verriegelungseinheit (5) ein Magnetfeldsensor (90) zum Erfassen eines Magnetfelds des magnetischen Elements (80) angeordnet ist.

2. Verriegelungseinheit nach Anspruch 1, **dadurch gekennzeichnet, dass** das magnetische Element (80) in dem Führungselement (40) angeordnet ist.

3. Verriegelungseinheit nach einem der vorhergehenden Ansprüche, **dadurch gekennzeichnet, dass** das magnetische Element (80) an einem dem Anker (34) gegenüberliegenden axialen Ende des Führungselements (40) angeordnet ist.

4. Verriegelungseinheit nach Anspruch 1, **dadurch gekennzeichnet, dass** das magnetische Element (80) über eine Verbindungsstange (85) mit dem Anker (34) und/oder mit der Ankerstange (36) und/oder mit dem Führungselement (40) verbunden ist.

5. Verriegelungseinheit nach Anspruch 4, **dadurch gekennzeichnet, dass** das magnetische Element (80) innerhalb des Kolbens (20) angeordnet ist und/oder vom Kolben (20) geführt ist.

6. Verriegelungseinheit nach einem der Ansprüche 4 bis 5, **dadurch gekennzeichnet, dass** zwischen der Verbindungsstange (85) und der Ankerstange (36), oder in der Verbindungsstange (85), ein Gelenk (86) ausgebildet ist.

7. Verriegelungseinheit nach einem der Ansprüche 4 bis 6, **dadurch gekennzeichnet, dass** der Kolben (20) aus einem nicht ferromagnetischen Material ausgebildet ist.

8. Verriegelungseinheit nach einem der Ansprüche 4 bis 7, **dadurch gekennzeichnet, dass** in dem Kolben (20) eine erste Öffnung (91) und eine zweite Öffnung (92) ausgebildet sind, wobei die erste Öffnung (91) radial innenliegend zum Magnetfeldsensor (90) angeordnet ist, wenn sich der Kolben (20) in einer ersten Endlage befindet, und wobei die zweite Öffnung (92) radial innenliegend zum Magnetfeldsensor (90) angeordnet ist, wenn sich der Kolben (20) in einer zweiten Endlage befindet.

9. Verriegelungseinheit nach Anspruch 8, **dadurch gekennzeichnet, dass** der Kolben (20) aus einem ferromagnetischen Material ausgebildet ist.

10. Verriegelungseinheit nach einem der vorhergehenden Ansprüche, **dadurch gekennzeichnet, dass** der Magnetfeldsensor (90) radial außenliegend zum magnetischen Element (80) angeordnet ist, wenn sich das Führungselement (40) in einer Endlage befindet.

11. Verriegelungseinheit nach einem der vorhergehenden Ansprüche, **dadurch gekennzeichnet, dass** der Magnetfeldsensor (90) radial außenliegend zum magnetischen Element (80) angeordnet ist, wenn sich das Führungselement (40) in derjenigen Endlage mit maximalem Abstand zum Elektromagneten (30) befindet.

12. Verriegelungseinheit nach einem der vorhergehenden Ansprüche, **dadurch gekennzeichnet, dass** der Magnetfeldsensor (90) in einem Gehäuse (10) der Verriegelungseinheit (5) angeordnet ist, welches den Kolben (20) aufnimmt.

13. Verriegelungseinheit nach Anspruch 12, **dadurch gekennzeichnet, dass** der Magnetfeldsensor (90) in einem Flansch (12) des Gehäuses (10) angeordnet ist.

14. Verriegelungseinheit nach einem der vorhergehenden Ansprüche, **dadurch gekennzeichnet, dass** der Magnetfeldsensor (90) im Kolben (20) angeordnet ist und/oder dass der Magnetfeldsensor mittels einer Halterung an einem Gehäuse der Verriegelungseinheit befestig ist.

15. Verriegelungseinheit nach einem der vorhergehenden Ansprüche, **dadurch gekennzeichnet, dass** die Verriegelungseinheit (5) eine Auswerteeinheit aufweist, welche mit dem Magnetfeldsensor (90) gekoppelt ist und dazu konfiguriert ist, basierend auf Ausgangswerten des Magnetfeldsensors (90) eine Lage des Führungselements (40) zu ermitteln.
